# EUROPÄISCHE PATENTANMELDUNG

(11) **EP 2 026 242 A1**
(43) Veröffentlichungstag der Anmeldung: **18.02.2009**
(21) Anmeldenummer: 08013955.3
(22) Anmeldetag: 31.07.2008
(51) Int. Cl.: G06K 7/00

(54) **Verfahren und Vorrichtung zur Datenerfassung und -übertragung**

(30) Priorität: 17.08.2007 DE 102007039258
(71) Anmelder: Habiger, Roland, Dr., 87640 Biessenhofen (DE)
(72) Erfinder: Habiger, Roland, Dr., 87640 Biessenhofen (DE)
(74) Vertreter: Vonnemann, Gerhard

(57) **Zusammenfassung**

Die vorliegende Erfindung betrifft ein Verfahren, eine Vorrichtung, ein System und die Verwendung der Vorrichtung zur Erfassung und Übertragung von auf RFID-Labeln gespeicherten Daten, insbesondere Arbeitsleistungen, -zeiten und Zusatzinformationen. Um eine besonders kostengünstige Lösung anzugeben, schlägt die Erfindung vor, das Handgerät als Reader und als Transponder auszubilden.

## Beschreibung

Die vorliegende Erfindung betrifft ein Verfahren und eine Vorrichtung zur Erfassung und Übertragung von auf RFID-Labeln gespeicherten Daten, insbesondere von Arbeitsleistungen, -zeiten und Zusatzattributen, auf ein Lesegerät und/oder eine Datenbank.

In einer ganzen Reihe von Wirtschaftszweigen müssen täglich Arbeitsleistungen, -zeiten etc. erfasst und möglichst lückenlos dokumentiert werden. Neben der Dokumentation dienen die erfassten Daten auch zur Analyse und Strukturierung von Arbeitsabläufen, um die Effizienz von Mitarbeitern zu steigern.

Die Erfassung der Arbeitsleistungen und -zeiten geschieht neben der noch immer verwendeten handschriftlichen Aufzeichnung bevorzugt so, dass sie per Barcode- oder RFID-Label in mobil- und digitalverarbeitbare Form gebracht und durch vom Mitarbeiter mitgeführte Handgeräte wie Barcodescannern oder RFID-Readern gelesen, gespeichert und mit Uhrzeit und Datum versehen werden. Der Mitarbeiter erfasst und quittiert so die einzelnen, von ihm abgearbeiteten Arbeitsschritte und die dafür benötigten Zeiten. Die während eines Arbeitstags gespeicherten Daten wird günstigstenfalls online in eine an die Erfordernisse des jeweiligen Wirtschaftszweigs angepassten Datenbank im Internet übertragen, wobei als Übertragungsmittel jeglicher bekannter Internetzugang, beispielsweise ein Mobilfunknetz, W-LAN oder andere eine andere Übertragungstechnik verwendbar ist. Im Normalfall wird das Handgerät an einen Computer angeschlossen und von diesem ausgelesen, wonach die Daten an die Datenbank weitergeleitet werden. Durch die digitalisierte Erfassung der Arbeitsleistung entfallen sämtliche handschriftlichen Aufzeichnungen, alle Leistungen stehen in Echtzeit zur Verfügung, Berichtswesen und Dokumentation sind tagesaktuell. Die Lohnabrechnung ist ebenfalls erleichtert, da aus der Dauer der Arbeitstätigkeit, der Berücksichtigung eventueller Wegezeiten, Pausenzeiten oder Ähnliches eine Software die für die Lohnabrechnung nötigen Werte berechnet.

Einsatzgebiete solcher bekannter Systeme sind beispielsweise die Wohnungswirtschaft, der Anlagenbau, Gesundheits- und Pflegedienstleistungen, Hotels oder Werkstätten, Gebäudereinigung oder sonstige Gebäudedienstleistungen, wobei vor allem Barcode/Barcodescanner verwendet werden, da der Aufbau solcher Erfassungssysteme mit RFID-Labeln komplizierter und teurer als ein vergleichbares Barcodesystem ist.

Nachteilig an den bekannten Systemen ist, dass die an jeden Mitarbeiter zu verteilenden Barcodescanner oder RFID-Lesegeräte Kosten in Höhe von 200,00 € bis über 800,00 € pro Stück verursachen, so dass die Einführung eines solchen bekannten Systems hohe Vorlaufinvestitionen erfordert, die sich sehr spät amortisieren, und daher den an sich wünschenswerten Einsatz der Systeme verhindern.

Es ist daher Aufgabe der Erfindung eine Vorrichtung und ein Verfahren anzugeben, mit denen die Einführungskosten eines solchen Systems deutlich reduziert werden. Es ist weiterhin Aufgabe der Erfindung, ein System anzugeben, mit dem Daten von RFID-Labeln erfasst und auf eine Datenbank übertragen werden.

Die Verfahrensaufgabe wird dadurch gelöst, dass die Daten vom RFID-Label durch einen Reader eingelesen und gespeichert werden und der Reader als Transponder von dem Lesegerät ausgelesen wird oder der Reader die Daten direkt an die Datenbank übermittelt. Anstatt jeden Mitarbeiter mit einem Lesegerät auszustatten, erlaubt das erfindungsgemäße Verfahren mit großem Vorteil, die Mitarbeiter mit einfachen Handgeräten zu versehen und Lesegeräte beispielsweise nur bei Vorarbeitern oder Gruppenleitern vorzusehen. Obwohl ein Anwender des erfindungsgemäßen Verfahrens zusätzlich zu den Lesegeräten einen weiteren Gerätetyp anschaffen und einen zusätzlichen Datenübertragungsschritt einführen muss, ist das erfindungsgemäße Verfahren überraschenderweise sicherer in der Anwendung und günstiger in der Anschaffung als die bekannten Verfahren. Dies ist vor allem darauf zurückzuführen, dass anstelle vieler teurer Lesegeräte mit jeweiligen Schnittstellen zur Datenverarbeitung nur wenige Lesegeräte benötigt werden, die ihre Daten von den vielen Handgeräten der Mitarbeiter erhalten. Durch das erfindungsgemäße Zwischenschalten eines zusätzlichen Datenübertragungsschrittes von RFID-Labeln auf ein konstruktiv einfach gehaltenes Handgerät wird demnach überraschend insgesamt ein einfacheres und bedienungssicheres Verfahren ermöglicht. In alternativer Ausgestaltung besteht die Lösung der Aufgabe darin, dass das konstruktiv einfach gehaltene Handgerät die von den RFID-Labeln eingelesenen Daten direkt an die Datenbank übermittelt. Auf diese Weise kann die Anschaffung von Lesegeräten vollständig unterbleiben, so dass das Verfahren noch kostengünstiger implementierbar ist.

Besonders dann, wenn der Reader die eingelesenen Daten zusammen mit Uhrzeit und Datum abspeichert, wobei eine im Reader enthaltene Echtzeituhr die Uhrzeit und das Datum liefert, ist das Verfahren besonders gut zur Datenerfassung geeignet. Die Verknüpfung von Datum und Uhrzeit mit der von den RFID-Labeln gelesenen Informationen ermöglicht beispielsweise die exakte Kalkulation von Wegezeiten, Arbeitsdauern, Gehaltsabrechnungen und dergleichen. Hierzu dienen die von RFID-Labeln ablesbaren Zusatzattribute zur Spezifizierung der Daten, z.B. (bitte Einfügenl). Die RFID-Label können dabei mit großem Vorteil in Form eines Fächers, vergleichbar einem Kartenspiel, vorgehalten und vom Mitarbeiter mitgeführt werden.

Erfolgt das Lesen der Daten des RFID-Labels und das Auslesen der auf dem Reader gespeicherten Daten über dieselbe Antenne, so ist mit großem Vorteil ein besonders einfaches und damit betriebssicheres Verfahren ermöglicht.

Steuert ein Mikrocontroller mit Echtzeituhr den Reader und/oder werden die Daten auf einem nichtflüchtigen Speicher gespeichert, so ist auf einfache Weise ein zuverlässig arbeitendes Verfahren ermöglicht.

In Ausgestaltung der Erfindung ist vorgesehen, dass der Reader/Transponder ortsfest ist. In diesem Fall fungiert er als Anlaufstation für Mitarbeiter, die sich dort mittels RFID-Karten an- oder abmelden, beispielsweise zu Zwecken der Anwesenheitserfassung.

In Ausgestaltung des erfindungsgemäßen Verfahrens ist vorgesehen, dass der Reader/Transponder die von den RFID-Labeln ortsfest oder mobil gesammelten Daten aktiv über ein in ihm vorgesehenes GPRS-Modul an die Datenbank überträgt. In diesem Fall kann mit großem Vorteil der Einsatz von Lesegeräten entfallen. Obwohl der Reader/Transponder in diesem Fall konstruktiv aufwendiger wird, besteht noch immer ein Kostenvorteil gegenüber der Verwendung von Lesegeräten mit Schnittstellen.

Alternativ ist vorgesehen, dass die Lesegeräte die von den Readern/Transpondern gesammelten Daten aktiv über ein GPRS-Modul an die Datenbank überträgt. Hierdurch kann das Zwischenschalten einer Auslesestation für die Lesegeräte entfallen, das Verfahren wird vereinfacht.

Die Vorrichtungsaufgabe wird durch ein Handgerät zur Erfassung und Übertragung von auf RFID-Labeln gespeicherten Daten, insbesondere Arbeitsleistungen, -zeiten und Zusatzattributen, gelöst, das als Reader und als Transponder ausgebildet ist. Hierdurch kann mit großem Vorteil jegliche Schnittstelle am Handgerät entfallen, die Spannungsversorgung ist entsprechend gering dimensionierbar. Das Handgerät funktioniert als Datenfähre, die aktiv als Reader Daten von einem RFID-Label ausliest und als Transponder von einem Lesegerät ausgelesen wird. Die Vorteile eines solchen Handgeräts wurden bereits erläutert.

In Ausgestaltung der Erfindung ist vorgesehen, dass es nur eine Antenne, einen nichtflüchtiger Speicher, eine Echtzeituhr, einen Mikrocontroller und/oder wenigstens einen Taster und/oder wenigstens eine LED und/oder wenigstens einen Lautsprecher und/oder ein GPRS-Modul aufweist. Der nichtflüchtige Speicher dient zur Speicherung der eingelesenen und mit Uhrzeit und Datum verknüpften Daten. Mittels des Tasters ist auf einfachste Weise eine Inbetriebnahme/Außerbetriebnahme des Handgeräts ermöglicht, die LED oder alternativ ein Lautsprecher signalisieren dem Verwender das erfolgreiche Einlesen und Speichern der Daten von den RFID-Labeln. Ein zweiter, kleinerer Taster dient zur Löschung von irrtümlich eingelesenen Daten und ist zur Vermeidung von Verwechslungen in anderer Form als der erste ausgebildet, beispielsweise kleiner, erhöht, tieferliegend, seitlich liegend oder dergleichen. Mittels des optional vorgesehenen GPRS-Moduls werden erfindungsgemäß die gesammelten Daten auf eine Datenbank übertragen. Hierbei ist es unerheblich, ob das Handgerät ortsfest oder mobil ist. In der ortsfesten Version könnten beispielsweise Arbeitszeiten von Mitarbeitern erfasst und an die Datenbank gesendet werden, die die erforderlichen Berechnungsschritte für Kommen, Gehen, Pause, Urlaub, Besprechung, Überstunden, Zeitkontoführung, Lohnabrechnung etc. ausführt, so dass keine eigene Zeiterfassungssoftware erforderlich ist.

In Ausgestaltung der Erfindung ist vorgesehen, dass das Handgerät eine Trägerfrequenz im ISM-Band verwendend ausgebildet ist.

Die Erfindung umfasst ebenfalls ein Lesegerät zum Auslesen der Daten aus einem Handgerät gemäß vorstehender Beschreibung, wobei das Lesegerät ein GPRS-Modul aufweist. Mittels dieses Moduls werden die Daten des Lesegeräts direkt an die Datenbank gesandt, das Zwischenschalten einer Auslesestation kann mit Vorteil entfallen.

Die Erfindung umfasst schließlich ein System zur Erfassung und Übertragung von auf RFID-Labeln gespeicherten Daten, insbesondere Arbeitsleistungen, -zeiten und Zusatzinformationen, in eine Datenbank, aufweisend wenigstens ein RFID-Label, wenigstens ein Handgerät wie beschrieben, gegebenenfalls wenigstens ein Lesegerät, und eine Vorrichtung zur Datenverarbeitung. Mit einem solchen System lassen sich Arbeitsleistungen besonders präzise erfassen, dokumentieren und auswerten.

Zur Erfindung gehört ebenfalls die Verwendung eines Handgeräts wie beschrieben zur mobilen Zeiterfassung und/oder zur Erfassung des Aufenthaltsortes von Mitarbeitern und/oder zur Ermittlung von Arbeitsleistungen und/oder Erfassung von Zusatzinformationen mit zusätzlichen RFID-Labeln.

Die Erfindung wird nachstehend anhand der einzigen Figur der Zeichnung näher erläutert, wobei

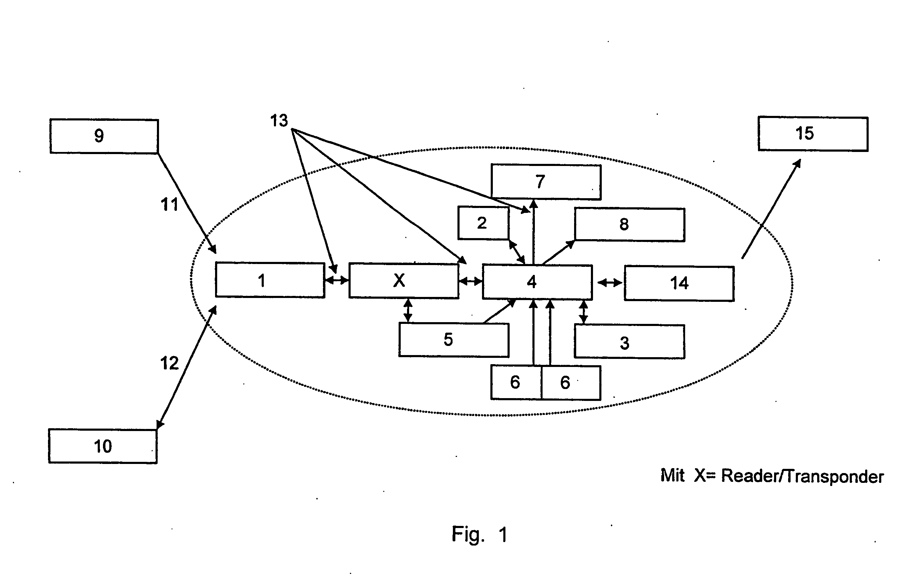

Fig. 1 ein Blockschaltbild einer erfindungsgemäßen Vorrichtung zeigt.

Fig. 1 zeigt ein Blockschaltbild einer erfindungsgemäßen Vorrichtung. Nicht dargestellt ist der mechanische Aufbau der Vorrichtung, insbesondere dessen Gehäuse. Dieses Gehäuse ist je nach mobilem oder ortsfestem Einsatz des Handgeräts unterschiedlich ausgestaltet. In der mobilen Ausführung könnte dieses Gehäuse in der Form zweier Halbschalen ausgebildet sein, die beispielsweise mittels Schnappverschluß zusammengefügt sind. Auf der oberen Halbschale könnten sich zwei Taster 6, ein Lautsprecher 8 und eine LED 7 befinden, die untere Halbschale könnte die einzige Antenne 1 enthalten. Die exakte Anordnung der Bauteile ist nicht erfindungswesentlich und kann daher variieren. Dies wird insbesondere dann der Fall sein, wenn das Handgerät ortsfest montiert ist. In diesem Fall sind keine Taster vorgesehen, da der Mitarbeiter keine Daten löschen können soll. Lediglich die Anzeige des erfolgreichen Dateneinlesens ist vorgesehen, wobei diese Anzeige nicht nur eine Ja/Nein-Information anzeigen könnte, sondern beispielsweise auch die aktuelle Zeit und den Namen des Mitarbeiters. Innerhalb des Gehäuses ist in der mobilen Version eine Batterie vorgesehen, die die notwendige Energie zur Verfügung stellt. In der ortsfesten Version könnte ein Anschluß an die örtliche Stromversorgung vorgesehen sein.

Die Antenne 1 steht über eine Wirk- und Datenverbindung 13 mit anderen Bauteilen des Readers/Transponders in Verbindung. Eine Energieversorgung 5 liefert die notwendige Energie für das aktive Einlesen, Verknüpfen mit Uhrzeit und Datum, Speichern der Daten in einem nichtflüchtigen Speicher 2 sowie Betrieb einer Echtzeituhr 3. Die Echtzeituhr 3 liefert die Zeit- und Datumsinformationen. Die Echtzeituhr 3 ist dabei erfindungsgemäß durch ein Lesegerät 10 stellbar ausgebildet.
Ein Mikrocontroller 4 steuert die Abläufe im Handgerät und ist über eine Verbindung 13 mit der Echtzeituhr 3 verbunden ausgebildet. Der Mikrocontroller 4 empfängt ebenfalls die Signale des ersten und zweiten Tasters 6 und steuert die LED 7, mit deren Hilfe das erfolgreiche Auslesen, Verknüpfen und Speichern der Daten signalisiert wird und Lautsprecher 8, der beispielsweise das erfolgreiche Löschen von Daten anzeigt. Der zweite Taster 6, mit dessen Hilfe irrtümlich eingelesene Daten gelöscht werden, steht ebenfalls über eine Wirkverbindung 13 mit dem Mikrocontroller 4 in Kontakt, der das entsprechende Signal vom zweiten Taster 6 empfängt und verarbeitet. Die erfolgreiche Löschung der Daten wird erfindungsgemäß mittels eines Lautsprechers 8 akustisch angezeigt, um so Verwechslungen mit der LED-Anzeige der erfolgten Speicherung zu vermeiden. Dargestellt ist ebenfalls das optionale GPRS-Modul 14, dass die im Speicher 2 gespeicherten Daten gemäß einer Steuerung durch den Mikrocontroller 4 an eine Datenbank 15 sendet. Hierbei kann der Speicher 2 ein EEPROM sein.

Das erfindungsgemäße Verfahren läuft in einer Ausführungsform so ab, dass ein Mitarbeiter zu Arbeitsbeginn ein RFID-Label mit seinen persönlichen Daten wie Sozialversicherungsnummer, Name etc. mittels seines erfindungsgemäß mobilen Handgeräts in Schlüsselanhängergröße einliest. Ist der Mitarbeiter auf dem Gebiet des Gebäudemanagements tätig, sieht das weitere Verfahren so aus: Der Mitarbeiter geht beim Betreten eines Gebäudes auf ein dort angebrachtes RFID-Label mit der Gebäudekennnummer zu. Durch Tastendruck wird das Handgerät aktiviert und die Information vom RFID-Label ausgelesen, mit der aktuellen Uhrzeit und dem Datum verknüpft und im Speicher 2 abgespeichert. Der erfolgreiche Abschluss dieses Vorgangs wird mittels kurz aufleuchtender LED 7 angezeigt. Gleichzeitig wird mittels eines Lautsprechers 8 ein deutlicher Ton zur Quittierung als akustische Rückmeldung erzeugt. Der Mitarbeiter beginnt dann mit seiner Tätigkeit, beispielsweise einer Beleuchtungsüberprüfung oder Reinigung. Hierzu liest er bei Beginn dieser Arbeit erneut Daten eines RFID-Labels 9 ein. Dieses ist beispielsweise in einer beschrifteten Mappe angebracht oder Bestandteil eines RFID-Fächers, in der sämtliche Arbeitsschritte in digitalisierter Form als RFID-Label abgelegt sind. Erneut werden Uhrzeit und Datum zu der Information dieses RFID-Labels zugespeichert. Nach Beendigung des Arbeitsschritts wird dasselbe RFID-Label nochmals gelesen. Dieser Vorgang wiederholt sich bei jedem Gebäude und jedem in diesem abgeleisteten Arbeitsschritt. Am Ende eines Arbeitstages befinden sich somit sämtliche abgearbeiteten Arbeitsschritte nebst -zeiten und Zusatzinformationen sofern erforderlich, in digitalisierter Form im Speicher des Handgeräts, das zwischen den Betätigungen energiesparend inaktiv ist. Das Handgerät wird am Ende des Arbeitstages vom Lesegerät des Vorarbeiters ausgelesen und die gespeicherten Daten komplett auf dessen Lesegerät übertragen. Dabei wird der interne Speicher des Handgeräts gelöscht und die Echtzeituhr gestellt. Alternativ kann das mobile Handgerät auch mit einem GPRS-Modul 14 ausgestattet sein, dass entweder nach Arbeitsende oder nach jeder Datenspeicherung die Daten direkt an die Datenbank 15 sendet. Zur Energieersparnis wird man jedoch eine seltenere Datenübertragung wählen.

Dadurch, dass der Mitarbeiter zum täglichen Arbeitsbeginn ein RFID-Label mit den Informationen zu seiner Person einliest und diese Daten ebenfalls gespeichert werden, lassen sich die erledigten Arbeiten exakt zuordnen und dokumentieren, so dass beispielsweise der Zoll problemlos entsprechende Nachweise erhalten kann.

Das erfindungsgemäße Verfahren in der ortsfesten Version läuft wie folgt ab: der Mitarbeiter identifiziert sich mit einem RFID-Label an dem ortsfesten Reader/Transponder, der wie geschildert Uhrzeit und Datum zu den gelesenen Daten zuspeichert. Diese Identifikation kann im Vorbeigehen passieren, da das ortsfeste Gerät die entsprechende RFID-Karte auch beabstandet erkennt und ausliest. Entweder werden die Daten dieses ortsfesten Geräts am Ende eines Arbeitstages oder einer Arbeitswoche von dem Lesegerät eines Vorarbeiters ausgelesen, oder es sendet seine über einen gewünschten Zeitraum gesammelten Daten mittels eines in ihm vorgesehenen GPRS-Moduls an die Datenbank. Die ortsfeste Version ist erfindungsgemäß vor allem zur reinen Arbeitszeiterfassung der Mitarbeiter gedacht.

Mit großem Vorteil kann die Erfindung auch für Wach- und Sicherheitsdienste, das Management des mobilen Maschinenparks, zur schnellen Inventarisierung von mobilem und festem Inventar oder zur Überstundenerfassung eingesetzt werden.

### BEZUGSZEICHENLISTE

- 1: Antenne
- 2: Speicher
- 3: Echtzeituhr
- 4: Mikrocontroller
- 5: Energieversorgung
- 6: erster und zweiter Taster
- 7: LED
- 8: Lautsprecher
- 9: RFID-Label
- 10: Lesegerät
- 11: aktives Einlesen
- 12: Auslesen
- 13: Wirk- oder Datenverbindung
- 14: GPRS-Modul
- 15: Datenbank

## Patentansprüche

1. Verfahren zur Übertragung von auf RFID-Labeln gespeicherten Daten, insbesondere von Arbeitsleistungen, -zeiten und Zusatzattributen, auf ein Lesegerät und/oder eine Datenbank, **dadurch gekennzeichnet, dass** die Daten vom RFID-Label durch einen Reader eingelesen und gespeichert werden und der Reader als Transponder von dem Lesegerät ausgelesen wird oder der Reader die Daten direkt an die Datenbank übermittelt.

2. Verfahren nach Anspruch 1, bei dem der Reader die eingelesenen Daten zusammen mit Uhrzeit und Datum abspeichert, wobei eine im Reader enthaltene Echtzeituhr die Uhrzeit und das Datum liefert.

3. Verfahren nach Anspruch 1 oder 2, bei dem das Lesen der Daten des RFID-Labels und das Auslesen der auf dem Reader gespeicherten Daten über dieselbe Antenne erfolgt.

4. Verfahren nach Anspruch 1, 2 oder 3, bei dem ein Mikrocontroller den Reader steuert und/oder die Daten auf einem nichtflüchtigen Speicher gespeichert werden.

5. Verfahren nach einem der Ansprüche 1 bis 4, bei dem der Reader/Transponder ortsfest ist.

6. Verfahren nach einem der Ansprüche 1 bis 5, bei der der Reader/Transponder die von den RFID-Labeln gesammelten Daten aktiv über ein GPRS-Modul an die Datenbank überträgt.

7. Verfahren nach einem der Ansprüche 1 bis 5, bei dem das Lesegerät die von den Reader/Transpondern gesammelten Daten aktiv über ein GPRS-Modul an die Datenbank überträgt.

8. Handgerät zur Erfassung und Übertragung von auf RFID-Labeln gespeicherten Daten, insbesondere Arbeitsleistungen, **dadurch gekennzeichnet , dass** das Handgerät als Reader und als Transponder ausgebildet ist.

9. Handgerät gemäß Anspruch 8, **dadurch gekennzeichnet , dass** es nur eine Antenne (1), einen nichtflüchtigen Speicher (2), eine Echtzeituhr (3), einen Mikrocontroller (4) und/oder wenigstens einen Taster (6) und/oder wenigstens eine LED (7) und/oder wenigstens einen Lautsprecher (8) und/oder ein GPRS-Modul (14) aufweist.

10. Handgerät gemäß Anspruch 8 oder 9, **dadurch gekennzeichnet , dass** es eine Trägerfrequenz im ISM-Band verwendend ausgebildet ist.

11. Lesegerät zum Auslesen der Daten aus einem Handgerät gemäß einem der Ansprüche 1 bis 10, **dadurch gekennzeichnet, dass** es ein GPRS-Modul aufweist.

12. System zur Erfassung und Übertragung von auf RFID-Labeln gespeicherten Daten, insbesondere Arbeitsleistungen, in eine Datenbank, aufweisend wenigstens ein RFID-Label, wenigstens ein Handgerät gemäß einem der Ansprüche 8 bis 10, gegebenenfalls wenigstens ein Lesegerät, und eine Vorrichtung zur Datenverarbeitung aufweist.

13. Verwendung eines Handgeräts nach einem der Ansprüche 8 bis 10 zur mobilen Zeiterfassung und/oder zur Erfassung des Aufenthaltsortes von Mitarbeitern und/oder zur Ermittlung von Arbeitsleistungen und/oder zur Ermittlung von Arbeitsinformationen.
